# EUROPÄISCHE PATENTSCHRIFT

(11) **EP 3 609 818 B1**
(45) Veröffentlichungstag und Bekanntmachung des Hinweises auf die Patenterteilung: **06.04.2022**
(21) Anmeldenummer: 18764994.2
(22) Anmeldetag: 17.08.2018
(51) Int. Cl.: B65G 15/54

(54) **STABGEFLECHTBAND**
ROD NETWORK BELT
GRILLE À FILS ENTRELACÉS

(30) Priorität: 17.10.2017 DE 102017124109
(43) Veröffentlichungstag der Anmeldung: 19.02.2020
(73) Patentinhaber: MÄRTENS Transportbänder GmbH, 24941 Flensburg (DE)
(72) Erfinder: ZENTINI, Stefan, 24941 Flensburg (DE)
(74) Vertreter: Lobemeier, Martin Landolf
(86) Internationale Anmeldenummer: PCT/DE2018/100720
(87) Internationale Veröffentlichungsnummer: WO 2019/076395

(56) Entgegenhaltungen:
- JP-A- H0 891 524
- JP-A- 2003 118 820
- US-A- 2 862 602
- US-B1- 6 615 978

## Beschreibung

Die Erfindung betrifft ein Stabgeflechtband.

Stabgeflechtbänder sind aus offenkundiger Vorbenutzung und insbesondere aus der JP 2003 118820 A, US 6 615 978 B1, US 2 862 602 A und JP H08 91524 A bekannt. US 6 615 978 B1 offenbart ein Stabgeflechtband nach dem Oberbegriff des Anspruchs 1. Sie zeichnen sich durch einen exakten, wartungsfreien Bandlauf sowie kleine Umlenkradien aus. Die offene Geflechtstruktur sorgt für freien Durchlass von flüssigen Medien, Wärme, Kälte oder Luft, sodass Stabgeflechtbänder häufig in Backstraßen der Lebensmittelindustrie eingesetzt werden. Insbesondere finden Stabgeflechtbänder zum Überziehen, Kühlen, Trocknen,

Streuen, Panieren, Verpacken, Erhitzen etc. von Lebensmitteln, beispielsweise als Überziehgitter in der Schokoladenindustrie, in der Fleisch- und Fischindustrie, im Bereich der Geflügel, Backwaren usw. Anwendung. Man findet sie jedoch auch bei Textiltrocknem und zum Transport von Leiterplatten.

Die Stabgeflechtbänder sind üblicherweise aus einer Mehrzahl von hintereinander gereihten, identisch ausgebildeten Stäben aufgebaut, wobei jeweils ein Stab mit einem in Förderrichtung gesehen vor diesem und hinter diesem angeordneten Stab durch Flechten verbunden ist. Dabei wird jede Reihe durch einen einzigen Stab gebildet, sodass die Stäbe jeweils eine identische Länge und eine identische Maschenanzahl aufweisen und damit die Breite des Transportbands definieren.

Die Stäbe selbst sind regelmäßig aus Federstahldraht oder Edelstahldraht mit einem Durchmesser von etwa 0,9 mm bis etwa 2,8 mm gebildet. In Abhängigkeit von dem Durchmesser des verwendeten Stabs können unterschiedliche Maschenweiten, Maschenlängen, Teilungen und insbesondere unterschiedliche Breiten der Stabgeflechtbänder von bis zu 500 cm erreicht werden.

Nachteilig an den bekannten Stabgeflechtbändern ist die technisch bedingte Beschränkung der Breite der Stabgeflechtbänder auf ungefähr 500 cm. Diese liegt unter anderem daran, dass zur Fertigung derartiger Bänder ein großer Platzbedarf besteht. Insbesondere kann die Vorspannung der gekanteten Stäbe, die den beim manuellen Einflechten aufgebrachten Biegemomenten entgegenwirken soll, bei großen Stablängen nicht einheitlich kompensiert werden, sodass bei großen Breiten mit Verwindungen der Bandstruktur, einem damit einhergehenden ungenauen Bandlauf und einer verringerten Lebensdauer derartiger Bänder zu rechnen ist. Stabgeflechtbänder mit Überbreite, d.h. mit einer Breite, die 500 cm übersteigt, sind nur mit einem mit der zunehmenden Breite einhergehenden Qualitätsverlust zu fertigen.

Insbesondere unterliegen Stabgeflechtbänder nicht nur einer Zugbelastung in Förderrichtung, sondern aufgrund der Verflechtung der einzelnen Maschen miteinander auch quer zur Förderrichtung. Daher führt eine fehlerhafte Verflechtung sehr langer Stäbe zu einem Schwachpunkt im Stabgeflechtband, von dem ausgehend sich für das Band schädliche Kräfte in der Ebene des Stabgeflechtbands fortpflanzen.

Aufgabe der Erfindung ist es daher, ein langlebiges Stabgeflechtband zu schaffen, das auch in sehr großen Breiten hergestellt und verwendet werden kann.

Diese Aufgabe wird erfindungsgemäß durch das Stabgeflechtband mit den Merkmalen von Anspruch 1 gelöst. Die Unteransprüche geben vorteilhafte Ausgestaltungen der Erfindung wieder.

Grundgedanke der Erfindung ist es, die Stäbe eines Stabgeflechtbands unterschiedlich lang anzulegen, wobei die miteinander verflochtenen Reihen Stäbe unterschiedlicher Länge aufweisen, die in Bezug auf die benachbarte Reihe versetzt angeordnet sind, wobei die jeweiligen Reihen die gleiche Länge aufweisen.

Der Vorteil des erfindungsgemäß ausgebildeten Stabgeflechtbands liegt in einer weiterhin genauen und einfachen Herstellung der einzelnen Stäbe, dem über die Länge der Stäbe im Verhältnis zu herkömmlichen Stabgeflechtbändern beim manuellen Einflechten gleichbleibend aufgebrachten Kräfte und dem damit vermiedenen Verziehen eines Bands, sowie einer verbesserten Kraftübertragung beim Transport des Bands sowohl in Transportrichtung als auch quer zur Transportrichtung.

Darüber hinaus können mit nur zwei unterschiedlich langen Stäben eine Vielzahl von unterschiedlich breiten Stabgeflechtbändern hergestellt werden, sodass die Lager- bzw. Vorratshaltung von Stäben zur Herstellung entsprechender Bänder sehr platzsparend ist.

Erfindungsgemäß ist also ein Stabgeflechtband vorgesehen, das eine Mehrzahl von ersten Stäben einer ersten Länge und eine Mehrzahl von zweiten Stäben einer sich von der ersten Länge unterscheidenden zweiten Länge aufweist, wobei eine erste Reihe aus einer Mehrzahl von aneinandergereihten ersten Stäben oder einer Mehrzahl von aneinandergereihten ersten Stäben mit wenigstens einem eingereihten zweiten Stab, und eine zweite Reihe aus einer Mehrzahl von aneinandergereihten ersten Stäben mit wenigstens einem eingereihten zweiten Stab gebildet ist, die ersten Stäbe der ersten Reihe und die ersten Stäben der zweiten Reihe versetzt zueinander angeordnet sind, die Stäbe der ersten Reihe und die Stäbe der zweiten Reihe miteinander verflochten sind.

Die jeweils durch die Stäbe gebildeten Reihen weisen dieselbe Länge auf, sodass das Stabgeflechtband eine einheitliche Breite erhält. Dabei sind die Stäbe in einer Reihe untereinander nicht verbunden, sondern nur mittelbar durch Flechten über die Stäbe einer weiteren Reihe.

Bevorzugt sind die erste Reihe und die zweite Reihe in Förderrichtung alternierend angeordnet.

Bevorzugt entspricht die Länge der ersten Stäbe (unter Berücksichtigung der Abstände der Stäbe innerhalb einer Reihe zueinander) in etwa der doppelten Länge der zweiten Stäbe. Durch diese Auslegung ist die Herstellung unterschiedlich langer Stäbe besonders einfach.

Die Stäbe des Stabgeflechtbands sind bevorzugt aus Draht gebildet. Dabei weisen die Stäbe besonders bevorzugt Draht gleichen Durchmessers und Materials auf.

Weiter ist bevorzugt vorgesehen, dass die Stäbe jeweils eine Mehrzahl von alternierend angeordneten kurzen Maschen und langen Maschen aufweisen. Dieses dient insbesondere der besseren Lastaufnahme und -verteilung im Stabgeflechtband.

Besonders bevorzugt weisen die Maschen der ersten Stäbe und die Maschen der zweiten Stäbe identische Abmessungen auf. Auch diese Ausgestaltung vereinfacht die Herstellung unterschiedlicher Stäbe ungemein.

Schließlich ist nach einer weiteren bevorzugten Ausgestaltung des Stabgeflechtbands nach der Erfindung vorgesehen, dass die Stäbe beidseitig angeordnete Abschlussösen aufweisen.

Der Vorteil der Erfindung besteht - wie zuvor angedeutet - darin, dass Stabgeflechtbänder theoretisch mit unendlicher Breite bei über die Fläche gleichbleibender Fertigungsgüte hergestellt werden können. Dabei ist die Verwendung von verhältnismäßig kurzen Stäben unterschiedlicher Länge hinsichtlich ihrer Herstellung Lagerung vorteilhaft: kurze Stäbe können einfach und mit geringem Platzaufwand hergestellt und platzsparend, gegebenenfalls vollautomatisch magaziniert werden.

Dadurch, dass nur zwei Stäbe unterschiedlicher Länge produziert und zu einem Stabgeflechtband gewünschter Breite verarbeitet werden, ist die Lagerung hinsichtlich verschiedener Produkte unterschiedlicher Breite besonders einfach und effizient.

Dabei müssen auch die bestehenden Produktionslinien für Stabgeflechtbänder nur leicht hinsichtlich der Bereitstellung von zwei Stäben unterschiedlicher Länge und hinsichtlich des Platzes für das Flechten der Stäbe modifiziert werden. Es ist insbesondere denkbar, dass mehrere Mitarbeiter gleichzeitig am Einflechten der Stäbe zu einem Stabgeflechtband großer Breite beteiligt sind.

Schließlich ist es - um einen aufwändigen Transport von schweren Stabgeflechtbändern mit Überbreite zu vermeiden - denkbar, dass eine Mehrzahl von zwei Stäben unterschiedlicher Breite versendet werden und erst am Einsatzort zum Stabgeflechtband gewünschter Breite miteinander verflochten werden.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine Draufsicht auf einen bevorzugt ausgestalteten ersten Stab erster Länge (A) und eine Draufsicht auf einen bevorzugt ausgestalteten ersten Stab zweiter Länge (B);
- Fig. 2: eine Draufsicht auf sechs Reihen eines besonders bevorzugt ausgestalteten Stabgeflechtbands;
- Fig. 3: eine Detailansicht des in Fig. 2 dargestellten Stabgeflechtbands; und
- Fig. 4: eine schematische Ansicht des Reihenaufbaus verschiedener Stabgeflechtbänder.

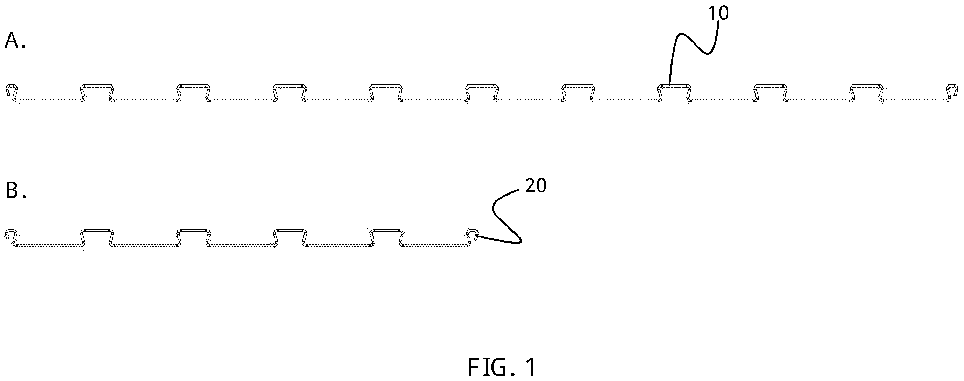

Fig. 1 zeigt eine Draufsicht auf einen bevorzugt ausgestalteten ersten Stab erster Länge (A) und eine Draufsicht auf einen bevorzugt ausgestalteten zweiten Stab zweiter Länge (B). Der Stab erster Länge 10 und der Stab zweiter Länge 20 sind wie bekannt ausgebildet. Beide Stäbe 10, 20 sind bevorzugt aus einem Draht gefertigt und durch Kanten in eine vorbestimmte Mehrzahl von Maschen mit vorbestimmter Maschenlänge und Maschenweite untereilt.

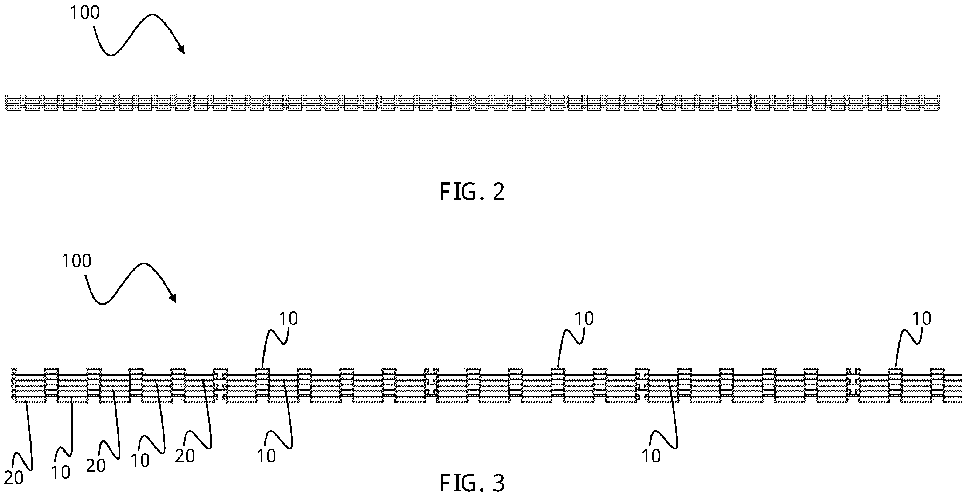

Diese beiden Stäbe 10, 20 sind zu dem in Fig. 2 anhand von sechs Reihen miteinander verflochtener Stäbe 10, 20 dargestellten besonders bevorzugt ausgestalteten Stabgeflechtband 100 nach der Erfindung miteinander verbunden.

Der Aufbau dieses besonders bevorzugt ausgestalteten Stabgeflechtbands 100 wird anhand des in der in Fig. 3 gezeigten Detaildarstellung der linken Seite des Stabgeflechtbands 100 näher erläutert.

Das Stabgeflechtband 100 weist in Transportrichtung eine Mehrzahl von nacheinander angeordneten Reihen miteinander verflochtener Stäbe 10, 20 auf. Die in Reihen angeordneten Stäbe 10, 20 sind dabei - wie bekannt - in Transportrichtung, nicht aber innerhalb einer Reihe quer zur Transportrichtung miteinander verflochten. Die Verbindung der Stäbe 10, 20 besteht also zwischen den Reihen, nicht aber innerhalb einer Reihe bzw. nur mittelbar durch Vermittlung einer weiteren Reihe.

So ist beispielsweise die in Fig. 3 zuoberst dargestellte Reihe aus ausschließlich nebeneinander angeordneten Stäben erster Länge 10 gebildet. Diese ersten Stäbe 10 weisen - wie bereits Fig. 1 zeigt - eine größere Länge als die zweiten Stäbe 20 auf. Insbesondere sind die ersten Stäbe 10 in etwa doppelt so lang wie die ersten Stäbe 20, weisen aber ansonsten dieselbe Maschenteilung, -länge und -weite auf.

Die unter der zuoberst dargestellten Reihe mit ausschließlich Stäben erster Länge 10 darunter liegende Reihe weist an ihrem linken Rand zunächst einen Stab zweiter Länge 20 auf, an den sich eine Mehrzahl von ersten Stäben erster Länge 10 anschließt, wobei der Abschluss dieser Reihe am rechten Rand wiederum von einem zweiten Stab zweiter Länge 20 gebildet ist. Die Stäbe 10, 20 der zweiten Reihe greifen in die ersten Stäbe 10 der ersten Reihe ein und sind also mit diesen, nicht aber innerhalb der eigenen Reihe untereinander verbunden.

Die darauf-folgende dritte Reihe weist wiederum ausschließlich Stäbe erster Länge 10 auf, die mit den Stäben erster und zweiter Länge 10, 20 der vor dieser und der nachfolgenden Reihe verbunden sind. Dieses Muster setzt sich in Transportrichtung bzw. gegen die Transportrichtung fort.

Dabei ist es nicht zwingenderweise notwendig, dass der Aufbau der Reihen identisch wiederholt wird. Erfindungsgemäß ist nur vorgesehen, dass unterschiedliche lange Stäbe 10, 20 in wenigstens einem Reihenaufbau verwendet werden, wobei die Reihen jeweils dieselbe Breite aufweisen.

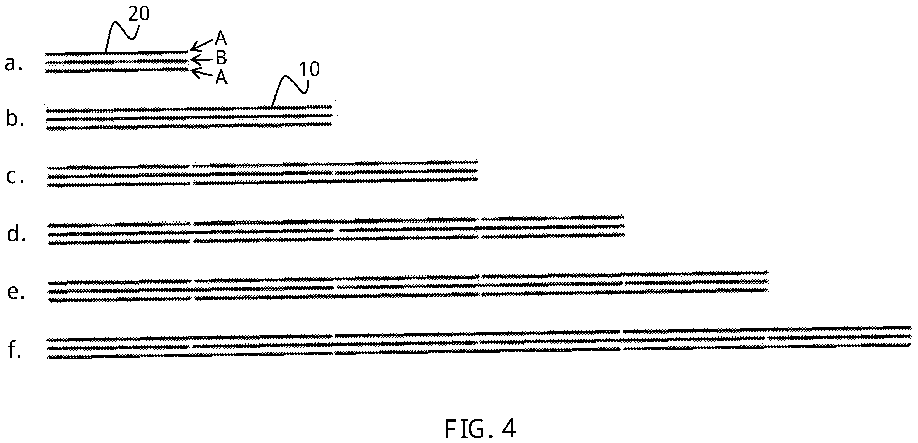

Schließlich zeigt Fig. 4 mehrere Möglichkeiten zur Ausbildung von Stabgeflechtbändern unterschiedlicher Breite. Das Flechtschema der unterschiedlichen Stabgeflechtbänder a, b, c, d, e, f ist jeweils anhand von drei Reihen A, B, A dargestellt, die von den Stäben erster Länge 10 und den Stäben zweiter Länge 20 gebildet sind. Dabei stellen die Stabgeflechtbänder a, b üblicherweise nach dem Stand der Technik hergestellte Stabgeflechtbänder dar, die jedoch aufgrund der effizienten Lagerhaltung möglich sind. Die Stabgeflechtbänder c-f sind erfindungsgemäß ausgestaltet, wobei Stabgeflechtband c und e in jeder Reihe jeweils wenigstens einen kurzen zweiten Stab 20 und wenigstens einen langen ersten Stab 10 aufweisen. Stabgeflechtbänder d und f weisen jeweils eine Reihe mit ausschließlich langen ersten Stäben 10 und eine Reihe sowohl mit kurzen als auch mit langen ersten und zweiten Stäben 10, 20 auf.

Weist beispielsweise der zweite Stab 20 eine Länge von 490 mm und der erste Stab 10 eine Länge von 990 mm auf, ergeben sich für das Stabgeflechtband folgende Breiten: a: 490 mm, b: 990 mm, c: 1490 mm, d: 1990 mm, e: 2490 mm und f: 2990 mm. Führt man diese Reihe fort, ergeben sich weitere Breiten von 3490 mm, 3990 mm, 4490 mm, 4990 mm, 5490 mm, 5990 mm, 6490 mm, 6990 mm, 7490 mm, 7990 mm, 8490 mm etc.

## Patentansprüche

1. Stabgeflechtband (100) mit
- einer Mehrzahl von ersten Stäben (10) einer ersten Länge,
- einer Mehrzahl von zweiten Stäben (20) einer sich von der ersten Länge unterscheidenden zweiten Länge,
wobei
- eine erste Reihe (A) aus einer Mehrzahl von aneinandergereihten ersten Stäben (10) oder einer Mehrzahl von aneinandergereihten ersten Stäben (10) mit wenigstens einem eingereihten zweiten Stab (20) gebildet ist,
**gekennzeichnet dadurch, dass**
- eine zweite Reihe (B) aus einer Mehrzahl von aneinandergereihten ersten Stäben (10) mit wenigstens einem eingereihten zweiten Stab (20) gebildet ist,
- die ersten Stäbe (10) der ersten Reihe (A) und die ersten Stäben (10) der zweiten Reihe (B) versetzt zueinander angeordnet sind,
- die Stäbe der ersten Reihe (A) und die Stäbe der zweiten Reihe (B) miteinander verflochten sind.

2. Stabgeflechtband (100) nach Anspruch 1, **dadurch gekennzeichnet, dass** die erste Reihe (A) und die zweite Reihe (B) in Förderrichtung alternierend angeordnet sind.

3. Stabgeflechtband (100) nach einem der vorhergehenden Ansprüche, **dadurch gekennzeichnet, dass** die Länge der ersten Stäbe (10) ungefähr der doppelten Länge der zweiten Stäbe (20) entspricht.

4. Stabgeflechtband (100) nach einem der vorhergehenden Ansprüche, **dadurch gekennzeichnet, dass** die Stäbe (10, 20) aus Draht sind.

5. Stabgeflechtband (100) nach einem der vorhergehenden Ansprüche, **dadurch gekennzeichnet, dass** die Stäbe (10, 20) eine Mehrzahl von alternierend angeordneten kurzen Maschen (30) und langen Maschen (40) aufweisen.

6. Stabgeflechtband (100) nach einem der vorhergehenden Ansprüche, **dadurch gekennzeichnet, dass** die Maschen der ersten Stäbe (10) und die Maschen der zweiten Stäbe (20) identische Abmessungen aufweisen.

7. Stabgeflechtband (100) nach einem der vorhergehenden Ansprüche, **dadurch gekennzeichnet, dass** die Stäbe (10, 20) beidseitig angeordnete Abschlussösen (50) aufweisen.

## Claims

1. Rod network belt (100) comprising
- a plurality of first rods (10) of a first length,
- a plurality of second rods (20) of a second length that is different from the first length,
wherein
- a first row (A) is formed from of a plurality of first rods (10) arranged sequentially one after the other or a plurality of first rods (10) arranged sequentially one after the other with at least one second rod (20) inserted therebetween, **characterized in that**:
- a second row (B) is formed from a plurality of first rods (10) arranged sequentially one after the other with at least one second rod (20) inserted therebetween,
- the first rods (10) of the first row (A) and the first rods (10) of the second row (B) are offset from one another,
- the rods of the first row (A) and the rods of the second row (B) are intertwined with one another.

2. Rod network belt (100) according to claim 1, **characterized in that** the first row (A) and the second row (B) are arranged alternately in the conveying direction.

3. Rod network belt (100) according to either of the preceding claims, **characterized in that** the length of the first rods (10) corresponds to approximately twice the length of the second rods (20).

4. Rod network belt (100) according to any of the preceding claims, **characterized in that** the rods (10, 20) are made of wire.

5. Rod network belt (100) according to any of the preceding claims, **characterized in that** the rods (10, 20) have a plurality of alternately arranged short meshes (30) and long meshes (40).

6. Rod network belt (100) according to any of the preceding claims, **characterized in that** the meshes of the first rods (10) and the meshes of the second rods (20) have identical dimensions.

7. Rod network belt (100) according to any of the preceding claims, **characterized in that** the rods (10, 20) have end eyelets (50) arranged on both sides.

## Revendications

1. Grille à fils entrelacés (100) comportant
- une pluralité de premiers fils (10) d'une première longueur,
- une pluralité de seconds fils (20) d'une seconde longueur différente de la première longueur,
dans laquelle
- une première rangée (A) est formée d'une pluralité de premiers fils (10) alignés les uns avec les autres ou d'une pluralité de premiers fils (10) alignés les uns avec les autres avec au moins un second fil (20) aligné,
**caractérisée en ce que** :
- une seconde rangée (B) est formée d'une pluralité de premiers fils (10) alignés les uns avec les autres avec au moins un second fil (20) aligné,
- les premiers fils (10) de la première rangée (A) et les premiers fils (10) de la seconde rangée (B) sont disposés décalés les uns par rapport aux autres,
- les fils de la première rangée (A) et les fils de la seconde rangée (B) sont entrelacés les uns avec les autres.

2. Grille à fils entrelacés (100) selon la revendication 1, **caractérisée en ce que** la première rangée (A) et la seconde rangée (B) sont disposées de manière alternée dans le sens de transport.

3. Grille à fils entrelacés (100) selon l'une des revendications précédentes, **caractérisée en ce que** la longueur des premiers fils (10) correspond approximativement au double de la longueur des seconds fils (20).

4. Grille à fils entrelacés (100) selon l'une des revendications précédentes, **caractérisée en ce que** les fils (10, 20) sont en fil de fer.

5. Grille à fils entrelacés (100) selon l'une des revendications précédentes, **caractérisée en ce que** les fils (10, 20) présentent une pluralité de mailles courtes (30) et de mailles longues (40) disposées de manière alternée.

6. Grille à fils entrelacés (100) selon l'une des revendications précédentes, **caractérisée en ce que** les mailles des premiers fils (10) et les mailles des seconds fils (20) présentent des dimensions identiques.

7. Grille à fils entrelacés (100) selon l'une des revendications précédentes, **caractérisée en ce que** les fils (10, 20) présentent des œillets d'extrémité (50) disposés des deux côtés.
